# EUROPEAN PATENT SPECIFICATION

(11) **EP 1 887 262 B1**
(45) Date of publication and mention of the grant of the patent: **09.09.2009**
(21) Application number: 07013998.5
(22) Date of filing: 17.07.2007
(51) Int. Cl.: F16H 63/42

(54) **Shift instructing apparatus and shift instructing method**
Wechselanweisungsvorrichtung und Wechselanweisungsverfahren
Appareil d'instruction de déphasage et procédé d'instruction de déphasage

(30) Priority: 08.08.2006 JP 2006215954
(43) Date of publication of application: 13.02.2008
(73) Proprietor: TOYOTA JIDOSHA KABUSHIKI KAISHA, Toyota-shi, Aichi-ken, 471-8571 (JP)
(72) Inventor: Suga, Shojiro, Toyota-shi Aichi-ken 471-8571 (JP); Suzuki, Michinobu, Toyota-shi Aichi-ken 471-8571 (JP); Ohkubo, Tadanao, Toyota-shi Aichi-ken 471-8571 (JP)
(74) Representative: Kuhnen & Wacker

(56) References cited:
- EP-A- 1 826 461
- DE-A1-102005 060 130
- JP-A- 11 311 332
- US-A- 4 723 215

## Description

### BACKGROUND OF THE INVENTION

### 1. Field of the Invention

The invention relates to a shift instructing apparatus and a shift instructing method that gives instructions with regard to a shift operation. More particularly, the invention relates to a shift instructing apparatus and a shift instructing method which, according to the running state of a vehicle, suppresses an instruction to shift against the intentions of a driver.

### 2. Description of the Related Art

A shift instructing apparatus is known which instructs a driver to perform a shift operation based on the relationship between engine speed and vehicle speed.

For example, Japanese Patent Application Publication No. JP-A-11-311332 describes a gear speed position indicating apparatus of an automatic transmission that can instantaneously perceive the direction of possible shifts and the direction in which a shift should be performed such that driving desired by the driver can always be performed stably and in the most appropriate manner.

The gear speed position indicating apparatus described in the foregoing publication is provided in an automatic transmission that has two shift modes, i.e., an automatic shift mode and a manual shift mode. Further, the gear speed position indicating apparatus includes current gear speed position indicating means for indicating the current gear speed position when in the manual shift mode; gear speed range detecting means for obtaining a gear speed position which satisfies an operating condition set in advance based on the current operating state when in the manual shift mode; and shift direction indicating means for comparing the current gear speed position with the gear speed position that satisfies the preset driving condition, and indicating the direction of the shift to be performed with the current gear speed position as the reference.

As described above, this gear speed position indicating apparatus can instantaneously perceive the direction of possible shifts and the direction in which a shift should be performed such that driving desired by the driver can always be performed stably and in the most appropriate manner. If the appropriate operating region excluding at least the excessive load and excessive speed regions of the engine is set as the operating condition, the driver is able to drive with the desired shift timing according to the running environment in the appropriate operating region as indicated by the gear speed position indicating apparatus.

However, in the gear speed position indicating apparatus described in the foregoing publication, there may be times when an instruction to perform a shift operation that is consistent with the intent of the driver to shift is unable to be appropriately given. This is because when the vehicle takes off from a standstill on a road with a low friction coefficient, such as a gravel road, a snowy road, or an icy road, the driver may intentionally select a gear speed that is higher than the lowest gear speed to reduce the driving force when taking off from a standstill in order to prevent the wheels from spinning.

In the gear speed position indicating apparatus described in the foregoing publication, it may be determined from the vehicle speed when the vehicle is taking off from a standstill that the lowest gear speed is the optimum gear speed, in which case a shift instruction to shift from the current gear speed into a lower gear speed may be given. This would be against the intentions of the driver, and as a result, may impart an unpleasant sensation to the driver with respect to the instruction for the shift operation.

US4723215A, DE102005060130A1 and EP1826461A1 each disclose a shift instructing apparatus and method according to the preamble of claim 1 and claim 7, respectively, able to prohibit a shift instruction when a predetermined condition is satisfied.

### SUMMARY OF THE INVENTION

This invention thus provides a shift instructing apparatus which suppresses an instruction for a shift operation against the intentions of the driver.

The apparatus relates to a shift instructing apparatus that instructs a driver to shift a transmission which is mounted in a vehicle and
can shift according to an operation by the driver. The transmission is one of a manual transmission and an automatic transmission that has a manual shift mode. This shift instructing apparatus includes instructing means for instructing the driver to shift the transmission; detecting means for detecting an actual gear speed established in the transmission; and controlling means for controlling the instructing means to instruct the driver to perform a shift, from among an upshift and a downshift, of the transmission based on results from comparing the detected actual gear speed and a required gear speed that corresponds to a state of the vehicle based on a shift map. The controlling means includes means for prohibiting the instruction of the shift, from among the upshift and the downshift, even if the detected actual gear speed is different from the required gear speed that corresponds to the vehicle state based on the shift map, when a predetermined condition is satisfied.

The controlling means prohibits an instruction of a shift, from among an upshift and a downshift, even if the detected actual gear speed is different from the required gear speed that corresponds to the state of the vehicle based on the shift map, when a predetermined condition (such as a condition that an actual gear speed that is different from a required gear speed that corresponds to the state of the vehicle based on the shift map be established when the vehicle takes off from a standstill) is satisfied. If an instruction to downshift is prohibited when an actual gear speed (such as 2nd speed) that is higher than the required gear speed (such as 1st speed) that corresponds to the state of the vehicle based on the shift map is selected when a vehicle takes off from a standstill, an instruction to downshift will not be given even if the driver intentionally selects a higher gear speed to make a vehicle which is stopped on a road with a low friction coefficient take off from a standstill. In this way, by setting a condition in advance that assumes a situation in which a downshift instruction or an upshift instruction is inappropriate and prohibiting the downshift instruction or upshift instruction when that condition is satisfied, it is possible to suppress an unpleasant sensation with respect to a shift instruction from being imparted to the driver in this type of situation. Accordingly, a shift instructing apparatus that inhibits a shift instruction against the intention of the driver can be provided.

According to the invention, the predetermined condition may be satisfied when the actual gear speed that is different from the required gear speed that corresponds to the state of the vehicle based on the shift map be established in the transmission when the vehicle takes off from a standstill. The controlling means also include means for prohibiting the instruction of the downshift when the predetermined condition is satisfied.

Accordingly, by prohibiting an instruction for a downshift when an actual gear speed (such as 2nd speed) that is higher than the required gear speed (such as 1st speed) that corresponds to the state of the vehicle based on the shift map is selected when a vehicle takes off from a standstill, an instruction to downshift will not be given even if the driver intentionally selects a higher gear speed to make a vehicle which is stopped on a road with a low friction coefficient take off from a standstill. Therefore, it is possible to suppress an unpleasant sensation with respect to a shift instruction when the vehicle takes off from a standstill from being imparted to the driver.

Also, the controlling means may include means for prohibiting an instruction to shift into the lowest gear speed when the predetermined condition is satisfied.

Accordingly, by prohibiting an instruction to shift into the lowest gear speed when the predetermined condition is satisfied, an instruction to shift into the lowest gear speed while the vehicle is running on a road with a low friction coefficient will not be given. Accordingly, it is possible to suppress an unpleasant sensation with respect to a shift instruction when the vehicle is running on a road with a low friction coefficient from being imparted to the driver.

In addition, the shift instructing apparatus may also include vehicle speed detecting means for detecting a vehicle speed. The controlling means may also include running state determining means for determining a state, from among a stopped state and a running state, of the vehicle based on the detected vehicle speed; history determining means for determining a history of the lowest gear speed having been established in the transmission when the vehicle is in the running state; and condition determining means for determining whether the predetermined condition is satisfied based on the determined history when the vehicle is in the running state and a gear speed that is different from the lowest gear speed is established in the transmission.

Accordingly, the condition determining means determines that the predetermined condition is satisfied when the 2nd speed is established with no history of the lowest gear speed having been established, when the vehicle is in the running state. As a result, it can be determined that the driver has intentionally selected 2nd speed and is attempting to make the vehicle take off from a standstill.

Also, an operating device that switches the gear speed established in the transmission according to an operation by the driver may be provided in the vehicle. The shift instructing apparatus may also include detecting means for detecting a gear speed after the gear speed has been switched by the operating device. The controlling means may include shift determining means for determining the gear speed established in the transmission based on the detected gear speed.

Accordingly, the controlling means can determine the gear speed established in the transmission by detecting the gear speed after the gear speed has been switched by the operating device.

Moreover, the shift instructing apparatus may include first physical quantity detecting means for detecting a physical quantity corresponding to a rotation speed of an input shaft of the transmission; and second physical quantity detecting means for detecting a physical quantity corresponding to a rotation speed of an output shaft of the transmission. The controlling means may include shift determining means for determining the gear speed established in the transmission based on the first physical quantity and the second physical quantity.

Accordingly, the gear speed established in the transmission can be determined by calculating the ratio of the input shaft rotation speed to the output shaft rotation speed, i.e., the speed ratio, of the transmission, based on the first physical quantity (such as the engine speed) and the second physical quantity (such as the vehicle speed).

Also, the controlling means may include means for continuing to prohibit an instruction to shift until the vehicle stops.

Accordingly, it is possible that a situation in which a downshift instruction or an upshift instruction is inappropriate may continue at least from the time the vehicle takes off from a standstill until the vehicle stops. Therefore, by continuing to prohibit the shift instruction until the vehicle stops, it is possible to suppress an unpleasant sensation with respect to a shift instruction from being imparted to the driver.

A second aspect of the invention relates to a shift instructing method for instructing a driver to shift a transmission, from among a manual transmission and an automatic transmission that has a manual shift mode, which can shift according to an operation by the driver. This shift instructing method is characterised by including: detecting an actual gear speed established in the transmission; generating a shift instruction signal based on results from comparing the detected actual gear speed and a required gear speed that corresponds to a state of a vehicle based on a shift map; determining whether a predetermined condition is satisfied with respect to the state of the vehicle provided with the transmission; and instructing the driver to perform a shift, from among an upshift and a downshift, of the transmission based on the generated shift instruction signal when the predetermined condition is not satisfied, and prohibiting the instruction of the shift, from among the upshift and the downshift, even if the detected actual gear speed is different from the gear speed that corresponds to the state of the vehicle based on the shift map, when the predetermined condition is satisfied, wherein the predetermined condition is satisfied when the actual gear speed that is different from the required gear speed that corresponds to the state of the vehicle based on the shift map is established in the transmission (2000) when the vehicle takes off from a standstill; and the instruction of the shift that is prohibited when the predetermined condition is satisfied and the detected actual gear speed is different from the required gear speed that corresponds to the state of the vehicle based on the shift map is an instruction to downshift.

Accordingly, by prohibiting an instruction for a downshift when an actual gear speed (such as 2nd speed) that is higher than the required gear speed (such as 1st speed) that corresponds to the state of the vehicle based on the shift map is selected when the vehicle takes off from a standstill, an instruction to downshift will not be given even if the driver intentionally selects a higher gear speed to make a vehicle which is stopped on a road with a low friction coefficient take off from a standstill. Therefore, it is possible to suppress an unpleasant sensation with respect to a shift instruction when the vehicle takes off from a standstill from being imparted to the driver.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG 1 is a block diagram schematically showing a powertrain of a vehicle provided with a shift instructing apparatus according to one example embodiment of the invention;
FIG 2 is a view showing the appearance of a combination meter according to this example embodiment;
FIG 3 is a functional block diagram of an ECU of the shift instructing apparatus according to this example embodiment;
FIG 4 is a shift line graph (i.e., a shift map) based on the relationship between vehicle speed and accelerator depression amount according to this example embodiment;
FIGS. 5A and 5B are flowcharts illustrating the control structure of a program executed by the ECU of the shift instructing apparatus according to this example embodiment; and
FIG 6 is a timing chart showing the operation of the shift instructing apparatus according to this example embodiment.

### DETAILED DESCRIPTION OF THE EXAMPLE EMBODIMENTS

Hereinafter, example embodiments of the invention will be described with reference to the accompanying drawings. In the following description, like parts will be denoted by like reference numerals. Like parts will also be referred to by the same nomenclature and will have the same function. Therefore, detailed descriptions of those parts will not be repeated.

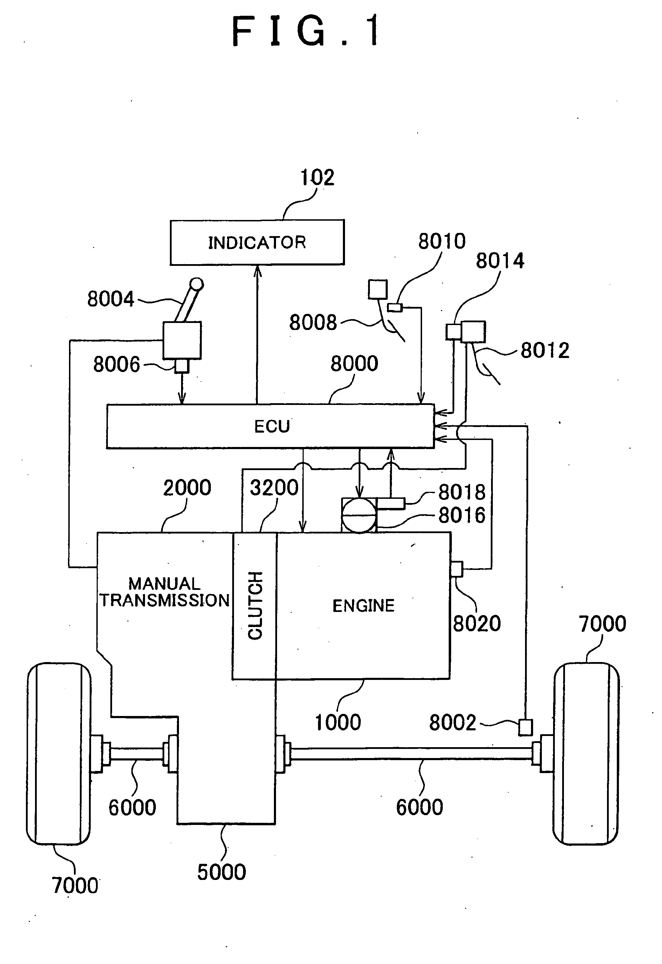

A vehicle provided with a shift instructing apparatus according to one example embodiment of the invention will now be described with reference to FIG 1. The vehicle described is a FF (Front engine, Front drive) vehicle, but the invention is not limited to this. That is, the vehicle may also be a vehicle other than a FF vehicle.

The vehicle includes an engine 1000, a manual transmission 2000, a clutch 3200, a differential gear 5000, a driveshaft 6000, front wheels 7000 which are driving wheels, an ECU (Electronic Control Unit) 8000, and rear wheels, not shown, which are driven wheels.

The engine 1000 is an internal combustion engine that bums a mixture of air and fuel injected from a fuel injector, not shown, in a combustion chamber of a cylinder. Force generated by the combustion of that air-fuel mixture pushes a piston in the cylinder down which causes a crankshaft to rotate.

The manual transmission 2000 is connected to the engine 1000 via the clutch 3200. This manual transmission 2000 changes the rotation speed of the crankshaft to a desired speed according to the gear speed selected by an operation of a shift lever 8004 by the driver. The shift lever 8004 and the manual transmission 2000 are connected together via a control cable such as a push-pull cable, for example. Accordingly, when the driver shifts the shift lever 8004 into a position corresponding to 1st speed, a gear speed that corresponds to 1st speed is established in the manual transmission 2000. The structure of the manual transmission 2000 is well known so a detailed description thereof will be omitted.

The clutch 3200 is connected to a clutch pedal 8012 via a clutch cylinder, not shown, and a hydraulic circuit. When the driver depresses the clutch pedal 8012, the clutch cylinder increases the hydraulic pressure in the hydraulic pressure circuit. As a result, the clutch 3200 disengages, thereby interrupting the flow of power between the engine 1000 and the manual transmission 2000. Also, when the driver releases the clutch pedal 8012, the clutch 3200 engages to transfer power between the engine 1000 and the manual transmission 2000. The clutch pedal 8012 is provided with a clutch switch 8014 which transmits an on signal to the ECU 8000 when the depression amount (i.e., the stroke amount) of the clutch pedal 3200 becomes equal to or greater than a predetermined depression amount.

A gear provided on an output shaft of the manual transmission 2000 is in mesh with the differential gear 5000 which is connected by spline engagement or the like to the drive shaft 6000. Power is transmitted via the drive shaft 6000 to the left and right front wheels 7000.

Various sensors and switches are connected to the ECU 8000 via a harness or the like. These sensors and switches include a vehicle speed sensor 8002, a position switch 8006 of the shift lever 8004, an accelerator depression amount sensor 8010 of an accelerator pedal 8008, the clutch switch 8014 of the clutch pedal 8012, a throttle opening amount sensor 8018 of an electronic throttle valve 8016, and an engine speed sensor 8020.

The vehicle speed sensor 8002 detects the speed of the vehicle from the rotation speed of the driveshaft 6000 and outputs a signal indicative thereof to the ECU 8000. The position of the shift lever 8004 is detected by the position switch 8006 and a signal indicative of thereof is output to the ECU 8000.

The accelerator depression amount sensor 8010 detects a depression amount of the accelerator pedal 8008 and outputs a signal indicative thereof to the ECU 8000. The accelerator depression amount corresponds to the degree of driving force required of the vehicle by the driver.

The throttle opening amount sensor 8018 detects an opening amount of the electronic throttle valve 8016 which is adjusted by an actuator and outputs a signal indicative thereof to the ECU 8000. This electronic throttle valve 8016 regulates the amount of air drawn into the engine 1000 (i.e., is used to adjust the output of the engine 1000).

The engine speed sensor 8020 detects a rotation speed of an output shaft (i.e., the crankshaft) of the engine 1000 and outputs a signal indicative thereof to the ECU 8000.

An indicator 102 is provided in a combination meter and indicates an instruction to the driver to either downshift (hereinafter referred to as a "downshift instruction") or upshift (hereinafter referred to as an "upshift instruction").

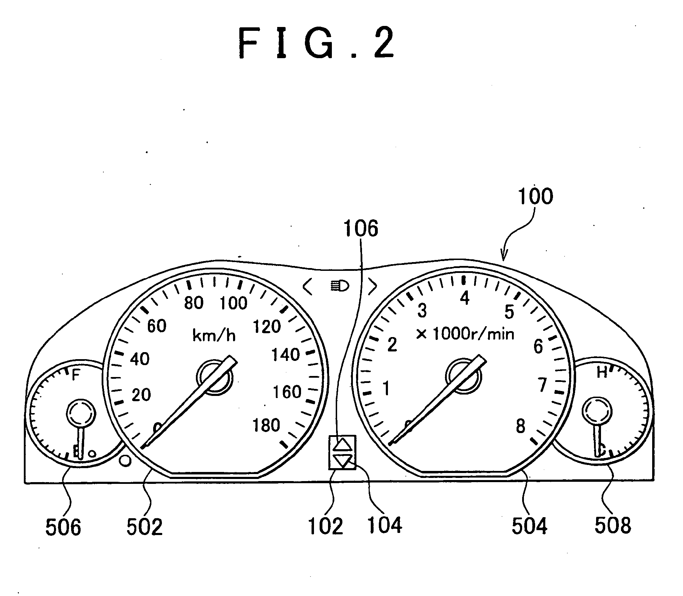

More specifically, the indicator 102 is provided in a combination meter 100 shown in FIG. 2 that is provided on the driver's side or in the center portion of an instrument panel. The combination meter 100 includes a speedometer 502, a tachometer 504, a fuel gauge 506, a coolant temperature gauge 508, and the indicator 102.

This indicator 102 includes a triangular upshift instruction lamp 106 in which one of the corners of the triangle is pointing up in FIG 2 (the top of FIG 2 is up), and a triangular downshift instruction lamp 104 in which one of the corners of the triangle is pointing down in FIG 2 (the bottom of FIG 2 is down). In this example embodiment, when the upshift instruction lamp 106 is illuminated, it instructs the driver to upshift. Also, when the downshift instruction lamp 104 is illuminated, it instructs the driver to downshift. Furthermore, when neither the upshift instruction lamp 106 nor the downshift instruction lamp 104 is illuminated (i.e., when both the upshift instruction lamp 106 and the downshift instruction lamp 104 are off), it means that the driver is instructed to maintain the current gear speed.

Incidentally, the upshift instruction lamp 106 and the downshift instruction lamp 104 are illuminated by LEDs (Light Emitting Diodes), for example, though they are not particularly limited to being illuminated by LEDs. For example, the indicator 102 may also use a liquid crystal panel such as a LCD (Liquid Crystal Display) instead of the upshift instruction lamp 106 and the downshift instruction lamp 104. That is, when indicating an upshift, the indicator 102 may display a triangular shape in which one of the corners points up in the liquid crystal panel, and when indicating a downshift, the indicator 102 may display a triangular shape in which one of the corners points down in the liquid crystal panel.

Also, the shapes of the upshift instruction lamp 106 and the downshift instruction lamp 104 are not limited to being triangular. For example, the upshift instruction lamp 106 may be in the shape of an upward pointing arrow pointing up in FIG 2 and the downshift instruction lamp 104 may be in the shape of a downward pointing arrow pointing down in FIG. 2.

Further, the indicator 102 may also indicate the currently selected gear speed (also referred to as the "actual gear speed" in the following description) and a gear speed that corresponds to a shift instruction (also referred to as the "required gear speed" in the following description) instead of an indication that corresponds to an upshift instruction and a downshift instruction. Alternatively, the indicator 102 may simply indicate only the gear speed that corresponds to the shift instruction. That is, when the gear speed that corresponds to the shift instruction is lower than the currently selected gear speed, the driver can determine that he or she is being instructed to downshift. Also, when the gear speed that corresponds to the shift instruction is higher than the currently selected gear speed, the driver can determine that he or she is being instructed to upshift.

When the indicator 102 receives an illumination control signal corresponding to an upshift instruction or a downshift instruction from the ECU 8000, it indicates an upshift instruction or a downshift instruction in response to the signal received. That is, when the indicator 102 receives an illumination control signal corresponding to an upshift instruction (i.e., an upshift instruction signal), it illuminates the upshift instruction lamp 106. Similarly, when the indicator 102 receives an illumination control signal corresponding to a downshift instruction (i.e., a downshift instruction signal), it illuminates the downshift instruction lamp 104.

The ECU 8000 controls various devices so that the vehicle runs in a desired manner based on the signals output from the vehicle speed sensor 8002, the position switch 8006, the accelerator depression amount sensor 8010, the clutch switch 8014, the throttle opening amount sensor 8018, and the engine speed sensor 8020 and the like, as well as programs and maps stored in ROM (Read Only Memory). Further, the ECU 8000 sends a signal corresponding to either an upshift instruction or a downshift instruction, depending on the running state of the vehicle, to the indicator 102. That is, the ECU 8000 sends a signal corresponding to either an upshift instruction or a downshift instruction to the indicator 102 based on the currently selected gear speed, the vehicle speed, and the accelerator depression amount.

The shift instructing apparatus according to this example embodiment includes the vehicle speed sensor 8002, the accelerator depression amount sensor 8010, the clutch switch 8014, the engine speed sensor 8020, the ECU 8000, and the indicator 102.

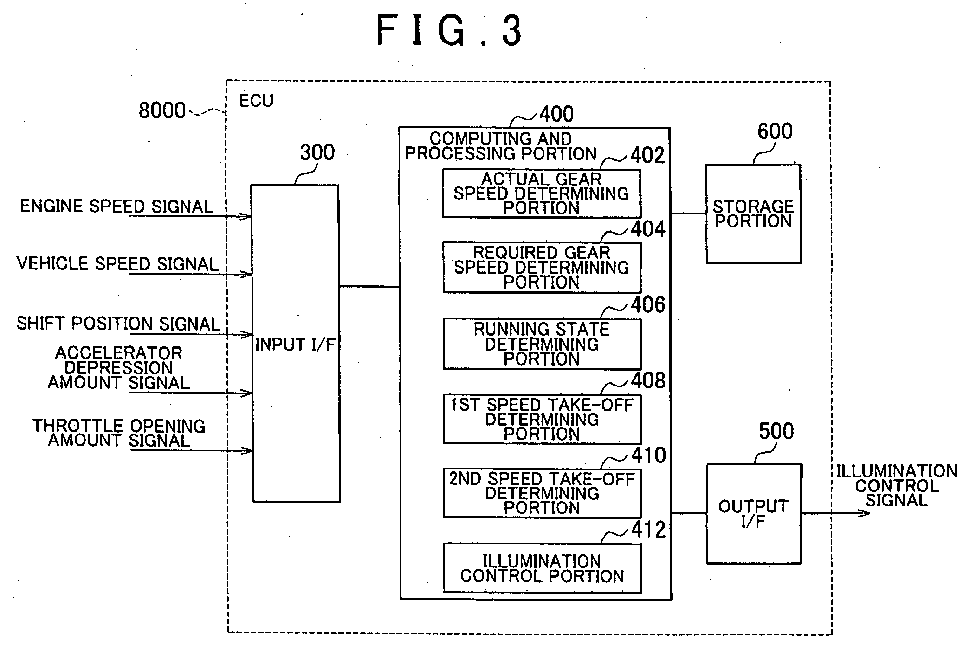

Hereinafter, the structure of the ECU 8000 of this example embodiment will be described with reference to the functional block diagram shown in FIG 3.

As shown in FIG 3, the ECU 8000 is provided with an input interface (hereinafter referred to as "input I/F") 300 that receives signals from various sensors; a computing and processing portion 400 which mainly includes a CPU (Central Processing Unit); a storage portion 600 which is realized by the ROM and the like described above and stores various programs as well as various information such as threshold values and maps; and an output interface (hereinafter referred to as "output I/F") 500 that outputs an illumination control signal (i.e., an upshift instruction signal or a downshift instruction signal) based on the computed results of the computing and processing portion 400.

In this example embodiment, the input I/F 300 receives an engine speed signal, a vehicle speed signal, a shift position signal, an accelerator depression amount signal, and a throttle opening amount signal.

The computing and processing portion 400 includes an actual gear speed determining portion 402, a required gear speed determining portion 404, a running state determining portion 406, a 1st speed take-off determining portion 408, a 2nd speed take-off determining portion 410, and an illumination control portion 412.

The actual gear speed determining portion 402 determines the gear speed established in the manual transmission 2000. In this example embodiment, the actual gear speed determining portion 402 may determine the gear speed established in the manual transmission 2000 based either on the shift position signal received from the position switch 8006 via the input I/F 300 or on the ratio of the input shaft rotation speed to the output shaft rotation speed of the manual transmission 2000.

Incidentally, the input shaft rotation speed of the manual transmission 2000 may be directly detected using a rotation speed sensor, or may be calculated based on a physical quantity corresponding to the input rotation speed such as the engine speed when the clutch 3200 is fully engaged (for example, when the clutch switch 8014 is off).

Also, the output shaft rotation speed of the manual transmission 2000 may be directly detected using a rotation speed sensor, or may be calculated based on a physical quantity corresponding to the output rotation speed such as the vehicle speed. That is, the output shaft rotation speed may be calculated based on the vehicle speed which is detected by the vehicle speed sensor 8002 and the reduction gear ratio from the output shaft of the manual transmission 2000 to the front wheels 7000.

Further, when the clutch switch 8014 is on, power from the engine is not transmitted to the manual transmission 2000 so the actual gear speed determining portion 402 determines that the actual gear speed is indeterminate.

The required gear speed determining portion 404 determines the required gear speed from the accelerator depression amount signal and the vehicle speed signal which are received via the input I/F 300, and a shift map that has been stored in advance in the storage portion 600. Incidentally, the required gear speed may also be determined from the actual gear speed that is determined besides the signals described above.

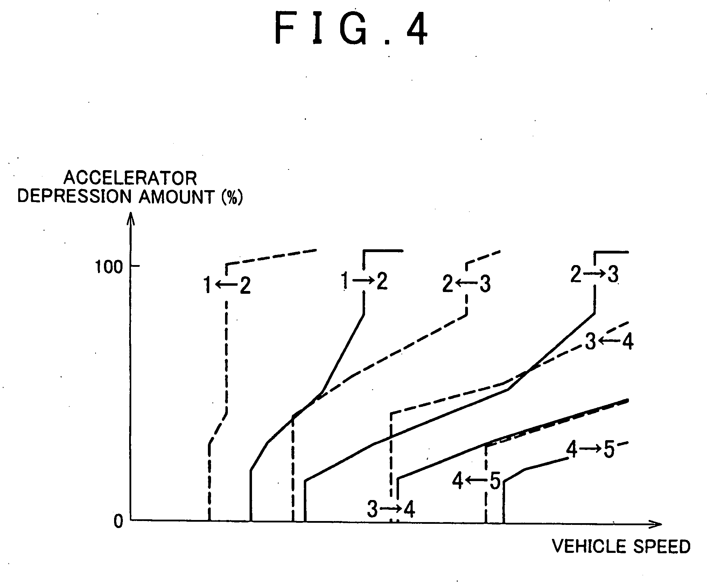

More specifically, a shift map such as that shown in FIG 4, which includes predefined downshift lines (shown by the broken lines) and predefined upshift lines (shown by the solid lines) which correspond to the vehicle speed and the accelerator depression amount, is stored in the storage portion 600 in advance. In FIG 4, the horizontal axis represents the vehicle speed and the vertical axis represents the accelerator depression amount. The shift map shown in FIG 4 is similar to a shift map used during forward running by an automatic transmission.

The downshift lines shown by the broken lines in FIG 4 define the shift timings of downshifts. That is, with the downshift lines as boundary lines, when a position specified in FIG 4 moves from the region on the right side of a downshift line to the region on the left side of that downshift line based on the detected accelerator depression amount and the vehicle speed, the required gear speed determining portion 404 determines the required gear speed based on the region corresponding to the specified position.

For example, when a position specified in FIG 4 crosses the "1 ← 2" downshift line shown in the drawing, the required gear speed determining portion 404 determines that the required gear speed is 1st speed based on the determined accelerator depression amount and the vehicle speed. A downshift line is established between each gear speed.

That is, when the "2 ← 3", "3 ← 4", and "4 ← 5" downshift lines are crossed, the required gear speed determining portion 404 determines that the required gear speed is 2nd speed, 3rd speed, and 4th speed, respectively.

The upshift lines shown by the solid lines in FIG 4 define the shift timings of upshifts. That is, with the upshift lines as boundary lines, when a position specified in FIG 4 moves from the region on the left side of an upshift line to the region on the right side of that upshift line based on the detected accelerator depression amount and the vehicle speed, the required gear speed determining portion 404 determines the required gear speed based on the region corresponding to the specified position.

For example, when a position specified in FIG 4 crosses the "1 → 2" upshift line shown in the drawing, the required gear speed determining portion 404 determines that the required gear speed is 2nd speed based on the detected accelerator depression amount and the vehicle speed. An upshift line is established between each gear speed.

That is, when the "2 → 3", "3 → 4", and "4 → 5" upshift lines are crossed, the required gear speed determining portion 404 determines that the required gear speed is 3rd speed, 4th speed, and 5th speed, respectively.

The running state determining portion 406 determines whether the vehicle is stopped based on the vehicle speed signal received from the vehicle speed sensor 8002 via the input I/F 300. More specifically, when the received vehicle speed signal indicates a vehicle speed of substantially zero, which is equal to or less than a predetermined vehicle speed, the running state determining portion 406 determines that the vehicle is stopped. Also, when the received vehicle speed signal indicates a vehicle speed that is greater than the predetermined vehicle speed, the running state determining portion 406 determines that the vehicle is running. The running state determining portion 406 may also turn a flag on when the vehicle is running and turn the flag off when the vehicle is stopped.

When the vehicle is running, the 1st speed take-off determining portion 408 determines the history of the lowest gear speed having been established in the manual transmission 2000. That is, when the running state determining portion 406 has determined that the vehicle is running (such as when the flag is on) and the actual gear speed determining portion 402 has determined that the actual gear speed is 1st speed, the 1st speed take-off determining portion 408 determines that the vehicle is taking off from a standstill in 1st speed (hereinafter simply referred to as a "1st speed take-off'). When a 1st speed take-off is determined, the 1st speed take-off determining portion 408 turns on a 1st speed take-off history flag. Also, when the running state determining portion 406 has determined that the vehicle is stopped (such as when the flag is off), the 1st speed take-off determining portion 408 turns off the 1st speed take-off history flag.

When the vehicle is running and a gear speed (i.e., 2nd speed) which is different from the lowest gear speed in the manual transmission 2000 is established, the 2nd speed take-off determining portion 410 determines whether a predetermined condition is satisfied based on the determined history. In this example embodiment, the predetermined condition is satisfied when a gear speed that is different from a gear speed that corresponds to the state of the vehicle based on the shift map is established when the vehicle takes off from a standstill.

That is, when the vehicle is running and 2nd speed is established as the actual gear speed without 1st speed having been established, the 2nd speed take-off determining portion 410 determines that the vehicle is taking off from a standstill in 2nd speed (hereinafter simply referred to as a "2nd speed take-off').

More specifically, the 2nd speed take-off determining portion 410 determines that a 2nd speed take-off is performed when the running state determining portion 406 has determined that the vehicle is running (such as when the flag is on), the actual gear speed determining portion 402 has determined that the actual gear speed is 2nd speed, and the 1st speed take-off determining portion 408 has turned the 1st speed take-off history flag off. When a 2nd speed take-off is determined, the 2nd speed take-off determining portion 410 turns on a 2nd speed take-off determination flag. Also, when the running state determining portion 406 has determined that the vehicle is stopped (such as when the flag is off), the 2nd speed take-off determining portion 410 turns off the 2nd speed take-off determination flag.

The illumination control portion 412 generates an illumination control signal corresponding to an upshift instruction signal or a downshift instruction signal based on the magnitude relation between the actual gear speed determined by the actual gear speed determining portion 402 and the required gear speed determined by the required gear speed determining portion 404, and then outputs that illumination control signal to the indicator 102 via the output I/F 500.

More specifically, when the actual gear speed is higher than the required gear speed, the illumination control portion 412 determines that a downshift is required. For example, when the actual gear speed is 2nd speed and the required gear speed is 1st speed, the illumination control portion 412 determines that a downshift is required. Thus, the illumination control portion 412 generates a downshift instruction signal at this time.

The illumination control portion 412 outputs the generated downshift instruction signal to the indicator 102 via the output I/F 500. The indicator 102 then illuminates the downshift instruction lamp 104 in response to receiving the signal corresponding to the downshift instruction.

Also, when the actual gear speed is lower than the required gear speed, the illumination control portion 412 determines that an upshift is required. For example, when the actual gear speed is 1st speed and the required gear speed is 2nd speed, the illumination control portion 412 determines that an upshift is required. Thus, the illumination control portion 412 generates an upshift instruction signal at this time.

The illumination control portion 412 outputs the generated upshift instruction signal to the indicator 102 via the output I/F 500. The indicator 102 then illuminates the upshift instruction lamp 106 in response to receiving the signal corresponding to the upshift instruction.

In this example embodiment, the illumination control portion 412 prohibits both an upshift and a downshift instruction when the predetermined condition with respect to the state of the vehicle is satisfied, even if the actual gear speed is different from the required gear speed.

As described above, in this example embodiment, the predetermined condition is satisfied when a gear speed that is different from a gear speed that corresponds to the state of the vehicle based on the shift map is established in the transmission when the vehicle takes off from a standstill. When this predetermined condition is satisfied, the illumination control portion 412 prohibits a downshift instruction. In this example embodiment, when the predetermined condition is satisfied, the illumination control portion 412 prohibits a shift instruction into the lowest gear speed.

More specifically, when the actual gear speed is 2nd speed, the required gear speed is 1st speed, and the 2nd speed take-off determination flag is on, the illumination control portion 412 prohibits a downshift instruction.

In this example embodiment, the actual gear speed determining portion 402, the required gear speed determining portion 404, the running state determining portion 406, the 1st speed take-off determining portion 408, the 2nd speed take-off determining portion 410, and the illumination control portion 412 will all be described as portions that function as software and are realized by the CPU, which is the computing and processing portion 400, executing a program stored in the storage portion 600, but these portions may also be realized by hardware. Incidentally, this kind of program is stored in a recording medium which is mounted in the vehicle.

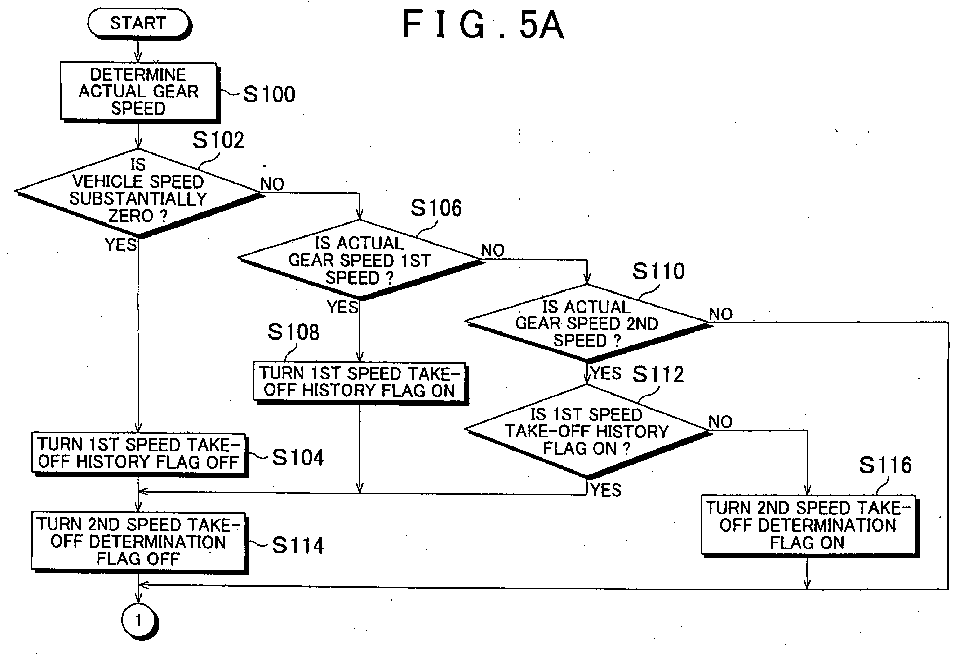

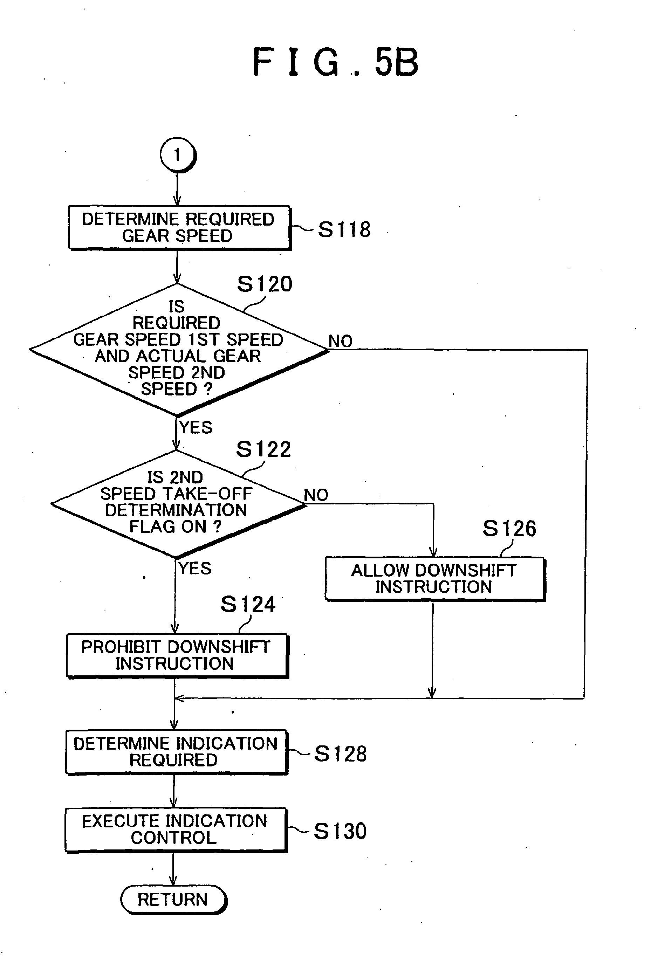

Hereinafter, the control structure of a program executed by the ECU 8000 of the shift instructing apparatus according to this example embodiment will be described with reference to FIGS. 5A, 5B.

In step S100, the ECU 8000 determines the actual gear speed. In step S102, the ECU 8000 determines whether the vehicle speed detected by the vehicle speed sensor 8002 is substantially zero. If the vehicle speed is substantially zero (i.e., YES in step S102), the process proceeds on to step S104. If not (i.e., NO in step S102), the process proceeds on to step S106.

In step S104, the ECU 8000 turns the 1st speed take-off history flag off. In step S106, the ECU 8000 determines whether the actual gear speed is 1st speed. If the actual gear speed is 1st speed (i.e., YES in step S106), the process proceeds on to step S 108. If not (i.e., NO in step S 106), the process proceeds on to step S110.

In step S108, the ECU 8000 turns the 1st speed take-off history flag on. In step S110, the ECU 8000 determines whether the actual gear speed is 2nd speed. If the actual gear speed is 2nd speed (i.e., YES in step S110), the process proceeds on to step S112. If not (i.e., NO in step S110), the process proceeds on to step S118.

In step S112, the ECU 8000 determines whether the 1st speed take-off history flag is on. If the 1st speed take-off history flag is on (i.e., YES in step S112), the process proceeds on to step S114. If not (i.e., NO in step S112), the process proceeds on to step S116.

In step S114, the ECU 8000 turns off the 2nd speed take-off determination flag. In step S116, the ECU 8000 turns on the 2nd speed take-off determination flag. In step S 118, the ECU 8000 determines the required gear speed. The method for determining the required gear speed is as described above so a detailed description thereof will not be repeated.

In step S120, the ECU 8000 determines whether the required gear speed is 1st speed and the actual gear speed is 2nd speed. If the required gear speed is 1st speed and the actual gear speed is 2nd speed (i.e., YES in step S120), the process proceeds on to step S122. If not (i.e., NO in step S120), the process proceeds on to step S128.

In step S122, the ECU 8000 determines whether the 2nd speed take-off determination flag is on. If the 2nd speed take-off determination flag is on (i.e., YES in step S122), the process proceeds on to step S124. If not (i.e., NO in step S122), the process proceeds on to step S126.

In step S124, the ECU 8000 prohibits a downshift instruction. In step S126, the ECU 8000 allows a downshift instruction. Then in step S128, the ECU 8000 determines the gear speed to indicate . More specifically, the ECU 8000 determines whether to require a downshift or an upshift based on the magnitude relation between the actual gear speed and the required gear speed.

In step S130, the ECU 8000 executes indication control based on the determination results. That is, the ECU 8000 outputs an illumination control signal corresponding to either an upshift instruction or a downshift instruction to the indicator 102. Alternatively, if it is determined that neither a downshift nor an upshift is required, the ECU 8000 does not output a downshift instruction signal or an upshift instruction signal to the indicator 102. Also, when a downshift instruction is prohibited, the ECU 8000 does not output a downshift instruction signal to the indicator 102.

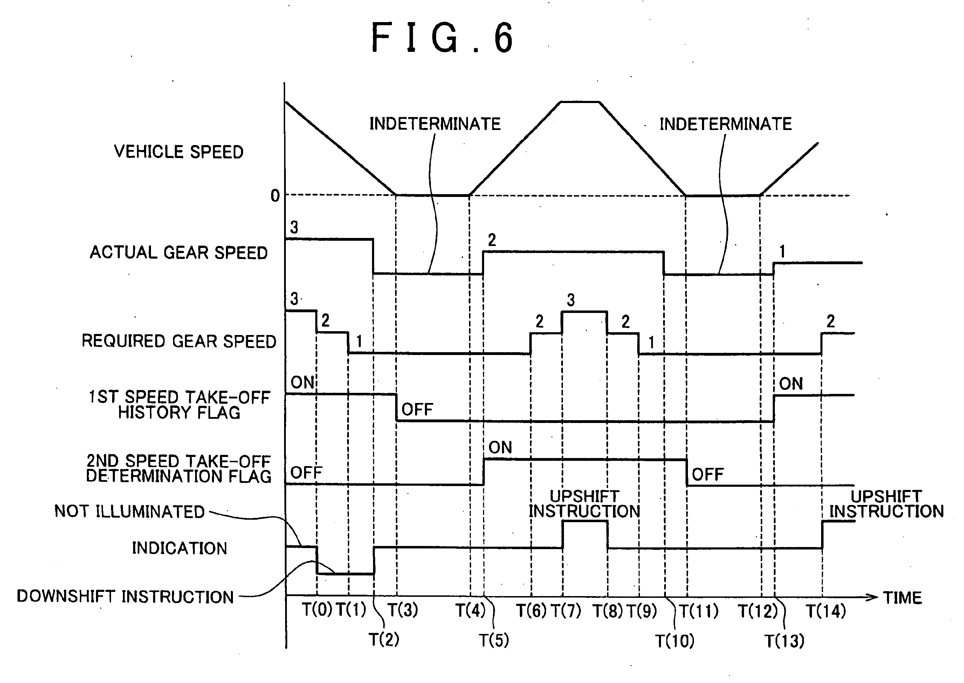

The operation of the shift instructing apparatus according to this example embodiment will now be described with reference to FIG 6 based on the foregoing structure, the structure of the functional block diagram, and the flowchart described above.

It is initially assumed that the vehicle is decelerating, as shown in the vehicle speed graph, the actual gear speed is 3rd gear, as shown in the actual gear speed graph, and the 1st speed take-off history flag is on, as shown in the 1st speed take-off history flag graph. If it is determined that the actual gear speed is 3rd speed (step S100), then the required gear speed is determined (step S118) because the vehicle speed is not substantially zero (i.e., NO in steps S102, S106, and S110).

When the required gear speed based on the vehicle speed, the accelerator depression amount, and the shift map is 3rd speed (i.e., NO in step S120), as shown in the required gear speed graph, neither the upshift instruction lamp 106 nor the downshift instruction lamp 104 is illuminated (steps S128 and S130), as shown in the indication graph.

At time T(0), the vehicle speed is dropping as shown by the vehicle speed graph so the required gear speed, which is based on the vehicle speed, the accelerator depression amount, and the shift map, is determined to be 2nd speed, as shown in the required gear speed graph (i.e., NO in steps S118 and S120). At this time the required gear speed is lower than the actual gear speed so the downshift instruction lamp 104 is illuminated as shown in the indication graph (steps S128 and S130).

At time T(1), the vehicle speed drops even further, as shown in the vehicle speed graph, so it is determined that the required gear speed is 1st speed, as shown in the required gear speed graph (step S118). The actual gear speed is 3rd speed (i.e., NO in step S120) so the downshift instruction lamp 104 remains illuminated (steps S128 and 130), as shown in the indication graph, because there is no change in the magnitude relation between the required gear speed and the actual gear speed.

At time T(2), when the driver depresses the clutch pedal 8012, the clutch 3200 releases, thereby preventing power from the engine 1000 from being transmitted to the manual transmission 2000. At this time it is determined that the actual gear speed is indeterminate (step S110), as shown in the actual gear speed graph. Therefore, even if it is determined that the required gear speed is 1st speed (step S118), the downshift instruction lamp 104 is not illuminated (steps S128 and S130) because the magnitude relation between the required gear speed and the actual gear speed is unknown (i.e., NO in step S120).

At time T(3), when the vehicle speed becomes substantially zero (i.e., YES in step S102), the 1st speed take-off history flag is turned off (step S104) as shown in the 1st speed take-off history flag graph.

At time T(4), when the driver depresses the accelerator pedal 8008 and partially releases the clutch pedal 8012 to partially engage the clutch 3200, the vehicle speed starts to increase. Because the clutch 3200 is not fully engaged (i.e., because the clutch switch 8014 is on), the actual gear speed remains indeterminate (step S100), as shown in the actual gear speed graph.

At time T(5), when the driver releases the clutch pedal 8012, the clutch switch 8014 turns off and the clutch 3200 fully engages. At this time the actual gear speed is determined to be 2nd speed (step S100), as shown in the actual gear speed graph.

At this time, the vehicle speed is not zero (i.e., NO in step S102), the actual gear speed is 2nd speed (i.e., NO in step S106 and YES in step S110), and the 1st speed take-off history flag is off, as shown in the 1st speed take-off history flag graph, (step S112) so the 2nd speed take-off determination flag is turned on, as shown in the 2nd speed take-off determination flag graph. The actual gear speed is 2nd speed, the required gear speed is 1st speed (i.e., YES in step S120), and the 2nd speed take-off determination flag is on (step S122) so a downshift instruction is prohibited (step S124). Therefore, the downshift indication lamp 104 remains off (i.e., not illuminated) (steps S128 and S130).

At time T(6), the vehicle speed increases, as shown in the vehicle speed graph, and it is determined that the required gear speed is 2nd speed (step S118), as shown in the required gear speed graph. At this time the actual gear speed and the required gear speed are the same gear speed (i.e., NO in step S120) so both the upshift instruction lamp 106 and the downshift instruction lamp 104 are off (i.e., not illuminated) (steps S128 and S130).

When the accelerator depression amount is reduced and the like after the vehicle speed has become constant at time T(7), as shown in the vehicle speed graph, it is determined that the required gear speed is 3rd speed (step S118), as shown in the required gear speed graph. At this time, the actual gear speed (i.e., 2nd speed) is lower than the required gear speed (i.e., 3rd speed) (i.e., NO in step S120) so the upshift instruction lamp 106 is illuminated, as shown in the indication graph (steps S128 and S130).

At time T(8), when the vehicle speed again slows as shown in the vehicle speed graph, it is determined that the required gear speed is 2nd speed (step S118), as shown in the required gear speed graph. At this time, the actual gear speed is 2nd speed so the actual gear speed is the same as the required gear speed (i.e., NO in step S120). Accordingly, the upshift instruction lamp 106 is turned off (steps S128 and S130).

At time T(9), when the vehicle speed slows further, the required gear speed is determined to be 1st speed (step S118), as shown in the required gear speed graph. At this time, the required gear speed is 1st speed and the actual gear speed is 2nd speed (i.e., YES in step S120). At this time, the 2nd speed take-off determination flag is on (step S122) so a downshift instruction is prohibited (step S124) and the downshift instruction lamp 104 remains off (steps S128 and S130).

At T(10), when the driver depresses the clutch pedal 8012, the clutch 3200 releases, thereby preventing power from the engine 1000 from being transmitted to the manual transmission 2000. Therefore, the actual gear speed is indeterminate (step S100), as shown in the actual gear speed graph.

At time T(11), when the vehicle speed becomes substantially zero (i.e., YES in step S102), the 2nd speed take-off determination flag is turned off (step S114), as shown in the 2nd speed take-off determination flag graph.

At time T(12), when the driver depresses the accelerator pedal 8008 and partially releases the clutch pedal (8012) to partially engage the clutch 3200, the vehicle speed starts to increase. Because the clutch 3200 is not fully engaged (i.e., because the clutch switch 8014 is on), the actual gear speed remains indeterminate (step S100), as shown in the actual gear speed graph.

At time T(13), when the driver completely releases the clutch pedal 8012, the clutch 3200 fully engages. At this time the actual gear speed is determined to be 1st speed (step S100), as shown in the actual gear speed graph. At this time, the vehicle speed is not zero (i.e., NO in step S102 and YES in step S106) so the 1st speed take-off history flag is turned on (step S108), as shown in the 1st speed take-off history flag graph.

At time T(14), the vehicle speed increases as shown in the vehicle speed graph and the required gear speed is determined to be 2nd speed (step S118), as shown in the required gear speed graph. At this time, the actual gear speed (i.e., 1st speed) is lower than the required gear speed (i.e., 2nd speed) (i.e., NO in step S120) so the upshift instruction lamp 106 is illuminated (steps S128 and S130).

As described above, with the shift instructing apparatus according to this example embodiment, if a downshift instruction is prohibited when 2nd speed, which is higher than 1st speed, is selected and the vehicle takes off from a standstill, a downshift instruction will not be issued even if the driver intentionally selects a higher gear speed to make a vehicle which is stopped on a road with a low friction coefficient take off. In this way, by setting a condition in advance that assumes a situation in which a downshift instruction or an upshift instruction is inappropriate and prohibiting the downshift instruction or upshift instruction when that condition is satisfied, it is possible to suppress an unpleasant sensation with respect to a shift instruction from being imparted to the driver in this type of situation. Accordingly, a shift instructing apparatus that inhibits a shift instruction against the intention of the driver can be provided.

Also, by prohibiting a shift instruction into the lowest gear speed, a shift instruction into the lowest gear speed will not be given while the vehicle is running on a road with a low friction coefficient. As a result, it is possible to suppress an unpleasant sensation with respect to a shift instruction when driving on a road with a low friction coefficient from being imparted to the driver.

Moreover, it is possible that a situation in which a downshift instruction or an upshift instruction is inappropriate will continue at least between the time the vehicle takes off from a stand still and the time the vehicle stops. Therefore, by continuing to prohibit the shift instruction until the vehicle stops, it is possible to suppress an unpleasant sensation with respect to a shift instruction from being imparted to the driver.

In the foregoing description, a downshift instruction in particular is prohibited, but the invention is not specifically limited to this. That is, an upshift instruction may also be prohibited when a predetermined condition is satisfied.

Incidentally, in this example embodiment, when the 2nd speed take-off flag is on, a downshift instruction is prohibited, but the invention is not particularly limited to this. For example, in the shift map, the 1 ← 2 downshift line may be removed. That is, it is possible to make it so that a downshift instruction will not be given only when the actual gear speed is 2nd speed and the required gear speed is 1st speed.

While the invention has been described with reference to example embodiments thereof, it is to be understood that the invention is not limited to the described embodiments or constructions. To the contrary, the invention is intended to cover various modifications and equivalent arrangements. In addition, while the various elements of the example embodiments are shown in various combinations and configurations, other combinations and configurations, including more, less or only a single element, are also within the spirit and scope of the invention.

## Claims

1. A shift instructing apparatus that instructs a driver to shift a transmission (2000), from among a manual transmission and an automatic transmission that has a manual shift mode, which is mounted in a vehicle and can shift according to an operation by the driver, **characterised by** comprising:
instructing means (102) for instructing the driver to shift the transmission (2000);
detecting means for detecting an actual gear speed established in the transmission (2000); and
controlling means (8000) for controlling the instructing means (102) to instruct the driver to perform a shift, from among an upshift and a downshift, of the transmission (2000) based on results from comparing the detected actual gear speed and a required gear speed that corresponds to a state of the vehicle based on a shift map,
wherein the controlling means (8000) includes means for prohibiting the instruction of the shift, from among the upshift and the downshift, even if the detected actual gear speed is different from the required gear speed that corresponds to the state of the vehicle based on the shift map, when a predetermined condition is satisfied, wherein the predetermined condition (S116) is satisfied when the actual gear speed that is different from the required gear speed that corresponds to the state of the vehicle based on the shift map is established in the transmission (2000) when the vehicle takes off from a standstill; and the controlling means includes means (S124) for prohibiting the instruction of the downshift when the predetermined condition (S 116) is satisfied.

2. The shift instructing apparatus according to claim 1, wherein the controlling means (8000) includes means (S124) for prohibiting an instruction to shift into the lowest gear speed when the predetermined condition (S 116) is satisfied.

3. The shift instructing apparatus according to claim 2, further comprising:
vehicle speed detecting means (8002) for detecting a vehicle speed,
wherein the controlling means (8000) includes:
running state determining means (406, S102) for determining a state, from among a stopped state and a running state, of the vehicle based on the detected vehicle speed;
history determining means (408) for determining a history of the lowest gear speed having been established in the transmission when the vehicle is in the running state; and
condition determining means (410, S114, S116) for determining whether the predetermined condition is satisfied based on the determined history (S104, S108) when the vehicle is in the running state and a gear speed that is different from the lowest gear speed is established in the transmission.

4. The shift instructing apparatus according to any one of claims 1 to 3, wherein an operating device (8004) that switches the gear speed established in the transmission (2000) according to an operation of the driver is provided in the vehicle; the shift instructing apparatus further includes detecting means (8006) for detecting a gear speed after the gear speed has been switched by the operating device (8004); and the controlling means (8000) includes shift determining means (402) for determining the gear speed established in the transmission (2000) based on the detected gear speed.

5. The shift instructing apparatus according to any one of claims 1 to 3, further comprising:
first physical quantity detecting means (8020) for detecting a physical quantity corresponding to a rotation speed of an input shaft of the transmission (2000); and
second physical quantity detecting means (8002) for detecting a physical quantity corresponding to a rotation speed of an output shaft of the transmission (2000),
wherein the controlling means (8000) includes shift determining means (402) for determining the gear speed established in the transmission (2000) based on the first physical quantity and the second physical quantity.

6. The shift instructing apparatus according to any one of claims 1 to 5, wherein the controlling means (8000) includes means for continuing to prohibit an instruction to shift until the vehicle stops.

7. A shift instructing method for instructing a driver to shift a transmission (2000), from among a manual transmission and an automatic transmission that has a manual shift mode, which can shift according to an operation by the driver, **characterised by** comprising:
detecting an actual gear speed established in the transmission;
generating a shift instruction signal based on results from comparing the detected actual gear speed and a required gear speed that corresponds to a state of a vehicle based on a shift map;
determining whether a predetermined condition is satisfied with respect to the state of the vehicle provided with the transmission (2000); and
instructing the driver to perform a shift, from among an upshift and a downshift, of the transmission based on the generated shift instruction signal when the predetermined condition is not satisfied, and prohibiting the instruction of the shift, from among the upshift and the downshift, even if the detected actual gear speed is different from the required gear speed that corresponds to the state of the vehicle based on the shift map, when the predetermined condition is satisfied, wherein the predetermined condition is satisfied when the actual gear speed that is different from the required gear speed that corresponds to the state of the vehicle based on the shift map is established in the transmission (2000) when the vehicle takes off from a standstill; and the instruction of the shift that is prohibited when the predetermined condition is satisfied and the detected actual gear speed is different from the required gear speed that corresponds to the state of the vehicle based on the shift map is an instruction to downshift.

## Patentansprüche

1. Schaltanweisungsvorrichtung, die einen Fahrer anweist, ein Getriebe (2000) zu schalten, bei dem es sich entweder um ein Handschaltgetriebe oder um ein einen Handschaltmodus aufweisendes Automatikgetriebe handelt, das in einem Fahrzeug montiert ist und entsprechend einer Betätigung durch den Fahrer geschaltet werden kann, **dadurch gekennzeichnet, dass** die Vorrichtung folgende Merkmale aufweist:
eine Anweisungseinrichtung (102) zum Anweisen des Fahrers, das Getriebe (2000) zu schalten;
eine Erfassungseinrichtung zum Erfassen einer in dem Getriebe (2000) eingestellten Ist-Gangstufe; und
eine Steuerungseinrichtung (8000) zum Steuern der Anweisungseinrichtung (102) zum Anweisen des Fahrers, einen Schaltvorgang, bei dem es sich entweder um einen Hoch- oder einen Rückschaltvorgang des Getriebes (2000) handelt, auszuführen, basierend auf Ergebnissen aus einem Vergleich zwischen der erfassten Ist-Gangstufe und einer Soll-Gangstufe, die einem Zustand des Fahrzeugs basierend auf einem Schaltkennfeld entspricht,
wobei die Steuerungseinrichtung (8000) aufweist eine Einrichtung zum Verhindern der Schaltanweisung, bei der es sich entweder um einen Hoch- oder einen Rückschaltvorgang handelt, auch wenn die erfasste Ist-Gangstufe sich von der Soll-Gangstufe unterscheidet, die dem Zustand des Fahrzeugs basierend auf dem Schaltkennfeld entspricht, wenn eine vorbestimmte Bedingung erfüllt ist,
wobei die vorbestimmte Bedingung (S116) erfüllt ist, wenn die Ist-Gangstufe, die sich von der Soll-Gangstufe unterscheidet, die dem Zustand des Fahrzeugs basierend auf dem Schaltkennfeld entspricht, in dem Getriebe (2000) eingestellt ist, wenn das Fahrzeug aus dem Stillstand losfährt; und die Steuerungseinrichtung eine Einrichtung (S 124) zum Verhindern der Anweisung des Zurückschaltens beinhaltet, wenn die vorbestimmte Bedingung (S 116) erfüllt ist.

2. Schaltanweisungsvorrichtung nach Anspruch 1, wobei die Steuerungseinrichtung (8000) eine Einrichtung (S124) zum Verhindern einer Anweisung zum Schalten in die niedrigste Gangstufe beinhaltet, wenn die vorbestimmte Bedingung (S116) erfüllt ist.

3. Schaltanweisungsvorrichtung nach Anspruch 2, die ferner aufweist:
eine Fahrzeuggeschwindigkeits-Erfassungseinrichtung (8002) zum Erfassen einer Fahrzeuggeschwindigkeit,
wobei die Steuerungseinrichtung (8000) aufweist:
eine Fahrzustands-Bestimmungseinrichtung (406, S102) zum Bestimmen eines Zustands, bei dem es sich entweder um einen Stoppzustand oder einen Fahrzustand des Fahrzeugs handelt, basierend auf der erfassten Fahrzeuggeschwindigkeit;
eine Verlaufsbestimmungseinrichtung (408) zum Bestimmen eines Verlaufs der niedrigsten Gangstufe, die in dem Getriebe eingestellt worden ist, wenn sich das Fahrzeug im Fahrzustand befindet; und
eine Bedingungsbestimmungseinrichtung (410, S 114, S 116) zum Bestimmen, ob die vorbestimmte Bedingung erfüllt ist, basierend auf dem bestimmten Verlauf (S 104, S 108), wenn das Fahrzeug sich im Fahrzustand befindet und eine Gangstufe, die sich von der untersten Gangstufe unterscheidet, im Getriebe eingestellt ist.

4. Schaltanweisungsvorrichtung nach einem der Ansprüche 1 bis 3, wobei eine Betätigungsvorrichtung (8004), die die in dem Getriebe (2000) eingestellte Gangstufe gemäß einer Betätigung durch den Fahrer schaltet, in dem Fahrzeug angeordnet ist; die Schaltanweisungsvorrichtung ferner eine Erfassungseinrichtung (8006) zum Erfassen einer Gangstufe beinhaltet, nachdem die Gangstufe durch die Betätigungsvorrichtung (8004) geschaltet worden ist; und die Steuerungseinrichtung (8000) eine Schaltbestimmungseinrichtung (402) zum Bestimmen der in dem Getriebe (2000) eingestellten Gangstufe basierend auf einer erfassten Gangstufe beinhaltet.

5. Schaltanweisungsvorrichtung nach einem der Ansprüche 1 bis 3, ferner aufweisend:
eine erste physikalische Größenerfassungseinrichtung (8020) zum Erfassen einer physikalischen Größe entsprechend einer Umdrehungsgeschwindigkeit einer Antriebswelle des Getriebes (2000); und
eine zweite physikalische Größenerfassungseinrichtung (8002) zum Erfassen einer physikalischen Größe entsprechend einer Umdrehungsgeschwindigkeit einer Abtriebswelle des Getriebes (2000),
wobei die Steuerungseinrichtung (8000) eine Schaltbestimmungseinrichtung (402) beinhaltet zum Bestimmen der Gangstufe, die in dem Getriebe (2000) eingestellt ist, basierend auf der ersten physikalischen Größe und der zweiten physikalischen Größe.

6. Schaltanweisungsvorrichtung nach einem der Ansprüche 1 bis 5, wobei die Steuerungseinrichtung (8000) eine Einrichtung zum Fortsetzen des Verhinderns einer Anweisung zum Schalten bis zum Stillstand des Fahrzeugs aufweist.

7. Schaltanweisungsverfahren zum Anweisen eines Fahrers, ein Getriebe (2000), bei dem es sich entweder um ein Handschaltgetriebe oder um ein einen Handschaltmodus aufweisendes Automatikgetriebe handelt, das entsprechend einer Betätigung durch den Fahrer geschaltet werden kann, zu schalten, **dadurch gekennzeichnet, dass** das Verfahren folgende Schritte beinhaltet:
Erfassen einer in dem Getriebe eingestellten Ist-Gangstufe;
Erzeugen eines Schaltanweisungssignals basierend auf Ergebnissen aus einem Vergleich der erfassten Ist-Gangstufe mit einer Soll-Gangstufe, die einem Zustand eines Fahrzeugs basierend auf einem Schaltkennfeld entspricht;
Bestimmen, ob eine vorbestimmte Bedingung in Bezug auf den Zustand des mit dem Getriebe (2000) ausgestatteten Fahrzeugs erfüllt ist; und
Anweisen des Fahrers, einen Schaltvorgang auszuführen, bei dem es sich entweder um einen Hoch- oder einen Rückschaltvorgang des Getriebes (2000) handelt, basierend auf dem erzeugten Schaltanweisungssignal, wenn die vorbestimmte Bedingung nicht erfüllt ist, und Verhindern der Anweisung des Schaltvorgangs, bei dem es sich entweder um einen Hoch- oder einen Rückschaltvorgang handelt, auch wenn sich die erfasste Ist-Gangstufe von der Soll-Gangstufe unterscheidet, die dem Zustand des Fahrzeugs basierend auf dem Schaltkennfeld entspricht, wenn die vorbestimmte Bedingung erfüllt ist, wobei die vorbestimmte Bedingung erfüllt ist, wenn die Ist-Gangstufe, die sich von der Soll-Gangstufe unterscheidet, die dem Zustand des Fahrzeugs basierend auf dem Schaltkennfeld entspricht, in dem Getriebe (2000) eingestellt ist, wenn das Fahrzeug aus dem Stillstand losfährt; und die Anweisung des Schaltvorgangs, die verhindert wird, wenn die vorbestimmte Bedingung erfüllt ist und die erfasste Ist-Gangstufe sich von der Soll-Gangstufe unterscheidet, die dem Zustand des Fahrzeugs basierend auf dem Schaltkennfeld entspricht, eine Anweisung zum Zurückschalten ist.

## Revendications

1. Appareil instruisant un changement de vitesse qui demande à un conducteur de changer la vitesse d'une transmission (2000), parmi une transmission manuelle et une transmission automatique qui possède un mode de changement de vitesse manuel, que l'on monte à bord d'un véhicule et qui peut changer selon une opération du conducteur, **caractérisé par** le fait de comprendre :
un moyen d'instruction (102) pour demander au conducteur de changer la vitesse de la transmission (2000) ;
un moyen de détection pour détecter un rapport de vitesse effectif établi dans la transmission (2000) ; et
un moyen de commande (8000) pour commander le moyen d'instruction (102) afin de demander au conducteur de procéder au changement de vitesse, parmi un passage à la vitesse supérieure et un passage à la vitesse inférieure, de la transmission (2000) sur la base de résultats provenant de la comparaison du rapport de vitesse effectif détecté et d'un rapport de vitesse requis qui correspond à un état du véhicule sur la base d'une carte de distribution des vitesses,
dans lequel le moyen de commande (8000) comporte un moyen pour interdire l'instruction du changement de vitesse, entre le passage à la vitesse supérieure et le passage à la vitesse inférieure, même si le rapport de vitesse effectif détecté est différent du rapport de vitesse requis qui correspond à l'état du véhicule sur la base de la carte de distribution des vitesses, lorsqu'une condition prédéterminée est satisfaite, où la condition prédéterminée (S116) est satisfaite lorsque le rapport de vitesse effectif qui est différent du rapport de vitesse requis qui correspond à l'état du véhicule sur la base de la carte de distribution des vitesses est établi dans la transmission (2000) lorsque le véhicule n'est plus à l'état d'arrêt; et le moyen de commande comporte un moyen (S124) pour interdire l'instruction du passage à la vitesse inférieure lorsque la condition prédéterminée (S116) est satisfaite.

2. Appareil instruisant un changement de vitesse selon la revendication 1, dans lequel le moyen de commande (8000) comporte un moyen (S 124) pour interdire une instruction de changement au rapport de vitesse le plus bas lorsque la condition prédéterminée (S116) est satisfaite.

3. Appareil instruisant un changement de vitesse selon la revendication 2, comprenant en plus :
un moyen de détection (8002) de la vitesse du véhicule pour détecter une vitesse du véhicule,
où le moyen de commande (8000) comporte:
un moyen de détermination (406, S102) de l'état de marche pour déterminer un état, entre un état d'arrêt et un état de marche, du véhicule sur la base de la vitesse détectée du véhicule;
un moyen de détermination (408) de l'historique pour déterminer un historique du rapport de vitesse le plus bas ayant été établi dans la transmission lorsque le véhicule se trouve dans l'état de marche ; et
un moyen de détermination (410, S114, S116) de condition pour déterminer si la condition prédéterminée est satisfaite sur la base de l'historique déterminé (S 104, S 108) lorsque le véhicule se trouve dans l'état de marche et qu'un rapport de vitesse qui est différent du rapport de vitesse le plus bas est établi dans la transmission.

4. Appareil instruisant un changement de vitesse selon l'une quelconque des revendications 1 à 3, dans lequel un dispositif opérationnel (8004) qui change le rapport de vitesse établi dans la transmission (2000) selon une opération du conducteur est prévu dans le véhicule; l'appareil instruisant un changement de vitesse comprend en plus un moyen de détection (8006) pour détecter un rapport de vitesse après le changement du rapport de vitesse par le biais du dispositif opérationnel (8004); et le moyen de commande (8000) comporte un moyen de détermination (402) du changement de vitesse pour déterminer le rapport de vitesse établi dans la transmission (2000) sur la base du rapport de vitesse détecté.

5. Appareil instruisant un changement de vitesse selon l'une quelconque des revendications 1 à 3, comprenant en plus :
un moyen de détection (8020) d'une première grandeur physique pour détecter une grandeur physique correspondant à une vitesse de rotation d'un arbre d'entrée de la transmission (2000) ; et
un moyen de détection (8002) d'une deuxième grandeur physique pour détecter une grandeur physique correspondant à une vitesse de rotation d'un arbre de sortie de la transmission (2000),
où le moyen de commande (8000) comporte un moyen de détermination (402) de la vitesse pour déterminer le rapport de vitesse établi dans la transmission (2000) sur la base de la première grandeur physique et de la deuxième grandeur physique.

6. Appareil instruisant un changement de vitesse selon l'une quelconque des revendications 1 à 5, dans lequel le moyen de commande (8000) comporte un moyen pour poursuivre l'interdiction de l'instruction de changement de vitesse jusqu'à ce que le véhicule s'arrête.

7. Procédé d'instruction de changement de vitesse pour demander à un conducteur de changer la vitesse d'une transmission (2000), parmi une transmission manuelle et une transmission automatique qui possède un mode de changement de vitesse manuel, qui peut changer selon une opération du conducteur, **caractérisé par** le fait de comprendre les étapes qui consistent à:
détecter une rapport de vitesse effectif établi dans la transmission ;
générer un signal d'instruction de changement de vitesse sur la base de résultats provenant de la comparaison du rapport de vitesse effectif détecté et d'un rapport de vitesse requis qui correspond à un état d'un véhicule sur la base d'une carte de distribution des vitesses ;
déterminer si une condition prédéterminée est satisfaite par rapport à l'état du véhicule pourvu avec la transmission (2000) ; et
demander au conducteur de procéder à un changement de vitesse, entre un passage à la vitesse supérieure et un passage à la vitesse inférieure, de la transmission sur la base du signal d'instruction de changement de vitesse généré lorsque la condition prédéterminée n'est pas satisfaite, et interdire l'instruction du changement de vitesse, entre le passage à la vitesse supérieure et le passage à la vitesse inférieure, même si le rapport de vitesse effectif détecté est différent du rapport de vitesse requis qui correspond à l'état du véhicule sur la base de la carte de distribution des vitesses, lorsque la condition prédéterminée est satisfaite, où la condition prédéterminée est satisfaite lorsque le rapport de vitesse effectif qui est différent du rapport de vitesse requis qui correspond à l'état du véhicule sur la base de la carte de distribution des vitesses est établi dans la transmission (2000) lorsque le véhicule n'est plus à l'état d'arrêt; et l'instruction du changement de vitesse qui est interdite lorsque la condition prédéterminée est satisfaite et que le rapport de vitesse effectif détecté est différent du rapport de vitesse requis qui correspond à l'état du véhicule sur la base de la carte de distribution des vitesses est une instruction de passage à la vitesse inférieure.
